# EUROPEAN PATENT APPLICATION

(11) **EP 4 753 120 A1**
(43) Date of publication of application: **03.06.2026**
(21) Application number: 25217936.1
(22) Date of filing: 24.11.2025
(51) Int. Cl.: H02K 3/52

(54) **ELECTRIC MOTOR FOR AUTOMOTIVE TRACTION AND ROAD MOTOR VEHICLE PROVIDED WITH SUCH MOTOR**

(30) Priority: 28.11.2024 IT 202400026916
(71) Applicant: FERRARI S.p.A., 41100 Modena (IT)
(72) Inventor: CRIVELLARO, Denis, 41100 MODENA (IT); DELLA FORNACE, Enrico, 41100 MODENA (IT); FAVERZANI, Paolo, 41100 MODENA (IT); FERRARA, Davide, 41100 MODENA (IT); PASQUALE, Stefano, 41100 MODENA (IT)
(74) Representative: Studio Torta S.p.A.

(57) **Abstract**

An electric motor (1) for automotive traction comprising: a stator (4) provided with a plurality of electrical windings (11), which are distributed around a motor longitudinal axis (A); a rotor which is accommodated in the stator (4) with the capability of rotating about said motor longitudinal axis (A); and an inner electric circuit (7), which connects said electrical windings (11) to an external terminal block (6) so as to allow the passage of electric current to and from said electrical windings (11), and includes an annular body (20) comprising: a series of annular flat-wires (21), which are made of electrically conductive material and are arranged one above the other so as to form a tubular stack; a tubular jacket (22), which is made of electrically insulating material and encloses within its annular wall the stack of annular flat-wires (21), isolating the individual annular flat-wires (21) from each other; and a series of longitudinal rods (24), which are made of electrically conductive material, protrude from one of the two axial ends of the tubular jacket (22), and at the same time extend inside the annular wall of the tubular jacket (22) until they reach and electrically connect to respective annular flat-wires (21).

## Description

### CROSS-REFERENCE TO RELATED APPLICATIONS

This patent application claims priority from Italian patent application no. 102024000026916 filed on November 28, 2024, the entire disclosure of which is incorporated herein by reference.

### TECHNICAL FIELD

The present invention concerns an electric motor for automotive traction and a road motor vehicle provided with such motor.

More specifically, the present invention preferably concerns an electric motor for high-performance electric or hybrid motor vehicles, to which the following disclosure will explicitly refer without loss of generality.

### STATE OF THE ART

As known, electric or hybrid motor vehicles are provided with a powertrain with at least one electric motor for automotive traction, which is capable to drive into rotation the drive wheels of the vehicle alone or in combination with an internal combustion engine.

Consequently, electric or hybrid vehicles also comprise: a rechargeable battery pack, which is capable to store inside itself a given quantity of electric energy to be supplied to the electric motor(s) of the powertrain; and an electronic-controlled power inverter, which is interposed between the battery pack and the electric motor and is capable of transforming, according to the commands given by the vehicle driver, the electric energy in direct current coming from the battery pack into electric energy in alternating current suitable for the electric motor(s) of the powertrain.

Currently the electric motors for automotive traction that guarantee the best performance and are most widely used in electric or hybrid motor vehicles are radial-flux permanent-magnets three-phase electric motors.

These electric motors traditionally comprise: a central drive shaft, which extends coaxial to the motor longitudinal axis and is capable of freely rotating about the same axis; a rotor substantially cylindrical in shape, which is fitted on the drive shaft so as to rotate together with the latter, and is provided with a series of permanent magnets angularly spaced around the drive shaft; and a stator substantially tubular cylindrical in shape, which is coaxial and surrounds the rotor substantially without interruption, and is provided with a series of electrical windings that are angularly spaced around the motor longitudinal axis so as to generate, in the central cavity of the stator and when travelled by alternating electric current, a rotating magnetic field that drives into rotation the stator.

In addition, these electric motors are moreover provided with a rigid outer casing, which encloses and contains inside itself the stator and the rotor, and usually supports the central drive shaft by the interposition of appropriate roller bearings.

Generally on the outer casing there is also located the connection terminal block that allows to connect the power inverter to the electric motor or, rather, to the electrical windings of the stator.

In the most powerful high-performing electric motors for automotive traction, furthermore, the electrical connection between the terminals of the external terminal block and the electrical windings of the stator is realized via a closed loop electrical circuit, which comprises an annular body securely fixed to one of the axial ends of the stator.

This annular body is basically made up of a pack of flat-wires made of electrically conductive material, which are stacked one above the other to form a substantially cylindrical tubular stack, and are appropriately spaced and isolated from one another by the interposition of a series of complementary-shape spacers made of electrically insulating material.

Each flat-wire of the annular body is furthermore provided with a series of small protruding tabs, which extend cantilevered from the outer perimeter edge of the flat-wire and are each in electrical continuity with one of the two ends of a respective electrical winding of the stator.

The annular body further comprises also a given number of large connection tongues made of electrically conductive material, oblong and with terminal eyelet, which are each in electrical continuity with a respective flat-wire of the annular body.

In further detail, each connection tongue has its proximal end securely fixed to the corresponding flat-wire, protrudes cantilevered and radially from the inner perimeter edge of the same flat-wire, and lastly is C-bent perpendicularly to the lying plane of the same flat-wire lies, so that its distal end is arranged spaced above one of the two axial heads/ends of the stack of flat-wires and spacers.

Each electrical terminal of the external terminal block is in electrical continuity with a respective connection tongue of the annular body via a rectilinear bar made of electrically conductive material, which extends from the terminal block to the distal end of said connection tongue, and is butt-fixed to the tongue by means of a pass-through anchoring bolt tightened on the terminal eyelet.

Although able to supply very high electrical currents to the electrical windings of the stator, the closed loop electrical circuit described above has significant overall dimensions that affect the overall axial length of the electric motor, with all problems that this entails.

### SUMMARY OF THE INVENTION

Aim of the present invention is to provide an annular body, which has smaller overall dimensions so as to reduce the overall axial length of the electric motor, with the same power being delivered by the motor.

In accordance with the above aims, according to the present invention there is provided an electric motor for automotive traction as specified in claim 1 and preferably, though not necessarily, in any one of the claims dependent thereon.

According to the present invention, there is also provided an electric or hybrid road vehicle as specified in claim 13.

### BRIEF DESCRIPTION OF THE FIGURES

The present invention will now be described with reference to the attached drawings, which illustrate a non-limiting embodiment example thereof, in which:
- Figure 1 is a perspective schematic view of an electric motor vehicle equipped with an electric motor for automotive traction realized according to the teachings of the present invention, with parts in transparency and parts removed for clarity's sake;
- Figure 2 is a perspective view of the electric motor for automotive traction which equips the motor vehicle shown in Figure 1, with parts removed for clarity's sake;
- Figure 3 is a perspective view of the inside of the electric motor for automotive traction shown in Figure 2, with parts removed for clarity's sake;

- Figure 4 is a partially exploded view of the electric motor for automotive traction shown in Figures 2 and 3, with parts removed for clarity's sake;
- Figure 5 is a perspective view on an enlarged scale of some components of the electric motor shown in Figures 3 and 4, with parts in section and parts removed for clarity's sake;
- Figure 6 is a perspective view on an enlarged scale of the components shown in Figure 5, with parts in section and parts removed for clarity's sake; whereas
- Figure 7 is a partially exploded perspective view of a component of the closed loop electrical circuit shown in Figures 3 to 6, with parts removed for clarity's sake.

### DETAILED DESCRIPTION OF THE EMBODIMENTS

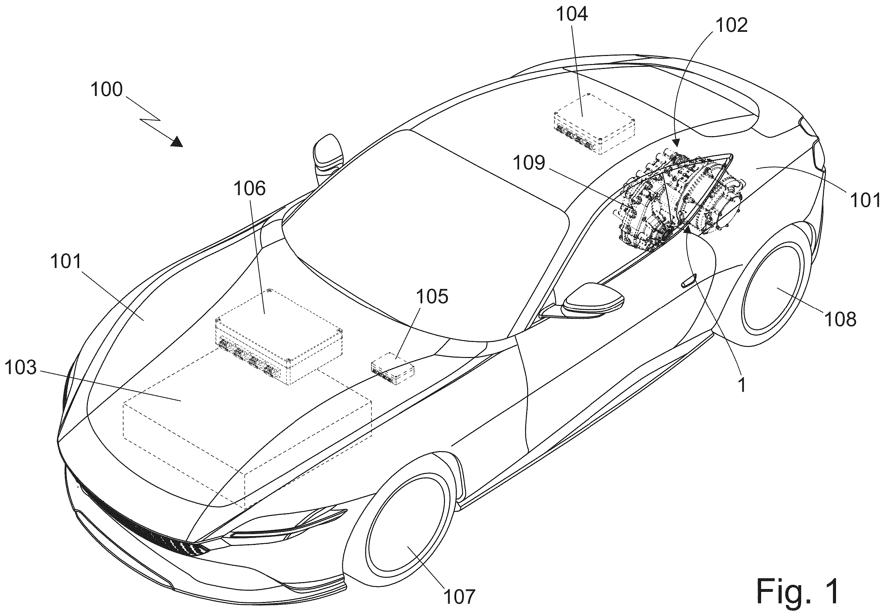

With reference to figure 1, number 1 denotes as a whole an electric motor for automotive traction, which is particularly adapted to be mounted/used in a road-use electric or hybrid motor vehicle 100 that advantageously can be used for transporting things and/or persons.

More specifically, the motor vehicle 100 is provided with ground-resting wheels and the electric motor 1 is adapted to drive into rotation at least one or, more conveniently, at least a pair of said ground resting wheels.

The motor vehicle 100 in particular comprises: a rigid vehicle-body 101 advantageously with self-supporting structure, which rests on the ground by means of a plurality of advantageously tyred, ground resting wheels, and is provided with a passenger compartment which is structured and dimensioned to accommodate the vehicle driver (namely the person who drives the vehicle) and preferably also at least one passenger advantageously placed beside the driver; and a powertrain 102, which is located on the vehicle-body 101, includes the electric motor 1, and is adapted to drive into rotation at least one or, more conveniently, at least a pair of said ground resting wheels.

In addition, the motor vehicle 100 further comprises: an electric-energy accumulator 103 preferably of a rechargeable type, which is located on the vehicle-body 101, and is capable of storing, inside itself, a given quantity of electric energy to be supplied to the powertrain 102, or rather to the electric motor 1; and an electric power supply unit 104, which is located on the vehicle-body 101, is interposed between the electric-energy accumulator 103 and the powertrain 102, and is capable of controlling/regulating the flow of electric energy towards the powertrain 102, or rather towards the electric motor 1 of the powertrain 102, advantageously according to the commands given by the vehicle driver.

In further detail, the motor vehicle 100 is preferably provided with a motor control unit 105, which receives and processes the commands given by the vehicle driver, for example via the accelerator pedal (not shown in the figures), and is adapted to command the electric power supply unit 104 according to said commands.

Preferably, the motor vehicle 100 is moreover provided with a recharging unit 106, which is located on the vehicle-body 101 and is adapted to recharge the electric-energy accumulator 103 when the motor vehicle 100 is connected to an external electric-energy source.

The external electric-energy source may be, for example, a recharging station for road vehicles of known type or the traditional domestic electric mains.

More specifically, the powertrain 102 and/or the electric -energy accumulator 103 and/or the electric power supply unit 104 and/or the motor control unit 105 and/or the recharging unit 106 is/are advantageously accommodated inside the vehicle-body 101.

With reference to Figure 1, in the example shown, in particular, the vehicle-body 101 is preferably oblong in shape, and preferably rests on the ground by means of at least one pair of front wheels 107 and at least one pair of rear wheels 108.

Preferably the front wheels 107 and the rear wheels 108 are moreover arranged in pairs on opposite sides of the vertical midplane of the vehicle, substantially at the vertexes of a rectangle or an isosceles trapezium. Furthermore, the passenger compartment of the vehicle-body 101 is preferably arranged between the front wheels 107 and the rear wheels 108.

In addition, the front wheels 107 are preferably idle and steering, whereas the rear wheels 108 are preferably drive wheels and optionally also steering wheels.

Preferably, the powertrain 102, or rather the electric motor 1, is therefore adapted to drive into rotation only the rear wheels 108.

In a different embodiment, however, the front wheels 107 may be drive wheels in addition to, or in place of, the rear wheels 108.

In other words, in the example shown the motor vehicle 100 is preferably a road-use car, namely a road motor vehicle for the private transport of persons.

With reference to Figure 1, the powertrain 102, in turn, is preferably located in the rear part of the vehicle-body 101, and comprises the electric motor 1 and advantageously also a gear reducer 109, which mechanically connects the electric motor 1 to the drive wheels of the vehicle, or rather to the rear wheels 108, so that they can be driven into rotation.

In other words, the gear reducer 109 is interposed between the electric motor 1 and the drive wheels of the vehicle, or rather the rear wheels 108.

Optionally, the powertrain 102 may also comprise an internal combustion engine, which is capable of rotating the drive wheels of the vehicle, or rather the rear wheels 108, in combination with or as an alternative to the electric motor 1.

In addition, the electric motor 1 is an alternating-current electric motor of polyphase (three-phase) type.

The electric power supply unit 104, therefore, is preferably adapted to transform the electric energy in direct current coming from the electric-energy accumulator 103 into electric energy in alternating current suitable for the powertrain 102, or rather suitable for the electric motor 1.

Preferably, the electric motor 1 can furthermore function also as an electric generator.

In other words, the electric motor 1 is preferably a rotating electric machine for automotive traction of reversible type, namely an electric machine that can function both as an electric motor absorbing electric energy and generating a mechanical drive torque, and as an electrical generator absorbing mechanical energy and generating electric energy.

The electric power supply unit 104, in turn, is preferably structured so as to control the flow of electric energy from the accumulator 103 to the electric motor 1 and vice versa.

In other words, the electric power supply unit 104 is preferably an electric-energy static conversion unit of bidirectional type.

With reference to Figure 1, in particular, the electric-energy accumulator 103 is preferably a rechargeable battery pack, and is preferably located in the front part of the vehicle-body 101.

The battery pack, in addition, preferably has a nominal capacity greater than or equal to 50 kWh and/or a nominal voltage higher than 600 Volt or, more conveniently, equal to approximately 800 Volt.

In other words, the battery pack 103 is preferably a high voltage battery pack.

The electric power supply unit 104, on the other hand, is preferably located near the powertrain 102.

Preferably the electric power supply unit 104 furthermore includes at least one electronic-controlled power inverter, advantageously of bidirectional type, which is interposed between the electric-energy accumulator 103, or rather the battery pack, and the powertrain 102, or rather the electric motor 1, and is adapted to transform the electric energy in direct current coming from the electric-energy accumulator 103, or rather from the battery pack, into electric energy in alternating current suitable for the electric motor 1, preferably varying the frequency and/or voltage thereof according to the signals coming from the motor control unit 105.

With reference to figure 1, in turn, the recharging unit 106 is preferably located/accommodated in the front part of the vehicle-body 101, near the electric-energy accumulator 103, or rather the battery pack, and is adapted to transform/ convert the electric energy coming from said external electric energy source into electric energy in direct current suitable for recharging the electric-energy accumulator 103, or rather the battery pack.

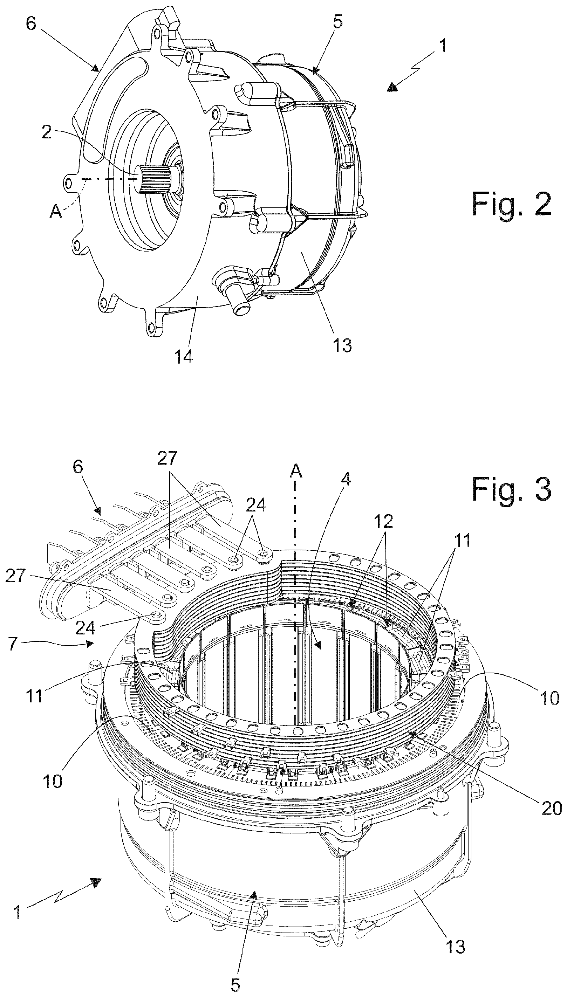

With reference to Figures 2, 3 and 4, on the other hand, the electric motor 1 is preferably a radial-flux polyphase (three-phase) electric motor, advantageously with permanent-magnets internal rotor.

In other words, the electric motor 1 comprises: a fixed part or stator with annular structure, which is adapted to generate, inside itself, a rotating magnetic field when travelled by electrical current; and a movable part or rotor, which is accommodated in axially rotatable manner and with play inside the stator, and is structured so as to be driven into rotation about its longitudinal axis by the rotating magnetic field generated by the stator.

More in detail, the stator is provided with a series of electrical windings, which are suitably spaced around the motor longitudinal axis, i.e. the rotation axis of the rotor, and are adapted to generate, when travelled by alternating electrical current, a rotating magnetic field inside the cavity that accommodates said rotor.

The rotor, on the other hand, is preferably provided with a series of permanent magnets adapted to generate a second magnetic field that interacts in a known way with the rotating magnetic field produced by the stator.

In addition, the electric motor 1 is moreover provided with a rigid outer casing, traditionally called outer frame, which is structured so as to enclose and contain, inside itself, the stator and the rotor.

More in detail, the electric motor 1 comprises: a central drive shaft 2, which extends coaxial to a motor longitudinal axis A and is capable of freely rotating about the same axis; a rotor (not visible in the figures) advantageously substantially cylindrical in shape, which extends coaxial to the longitudinal axis A, and is shrunk on or, in any case, rigidly fixed to said central drive shaft 2, so as to rotate together with the latter about the longitudinal axis A; and a stator 4 advantageously with substantially tubular cylindrical structure, which extends coaxial to the longitudinal axis A and is fitted with play on the rotor.

The stator 4 is provided with a series of electrical windings, which are suitably spaced/distributed around the motor longitudinal axis A, i.e. around the rotor, so that they can generate, when travelled by alternating electrical current, a rotating magnetic field inside the central cavity that accommodates said rotor.

The rotor (not visible in the figures), on the other hand, is preferably provided with a series of permanent magnets, which are suitably spaced around the longitudinal axis A, so as to create a second magnetic field that interacts with the rotating magnetic field produced by the stator 4, so as to drive into rotation the rotor and the drive shaft 2 about the longitudinal axis A.

The electric motor 1, in addition, further comprises: a rigid outer casing 5, advantageously with self-supporting structure, which is structured so as to enclose and contain, inside itself, the stator 4, the rotor and at least a part of the drive shaft 2; a terminal block 6, which is advantageously located on the rigid casing 5 so as to be easily accessible from the outside of the motor, and is structured so as to allow the electrical connection of the electric motor 1 to the electric power supply unit 104 or any other device capable to power the electric motor 1; and an inner electric circuit 7, which is entirely accommodated inside the rigid casing 5 and is structured so as to electrically connect the external terminal block 6 to the various electrical windings of the stator 4, thus allowing the flow of electrical current from and towards the electrical windings of the stator 4.

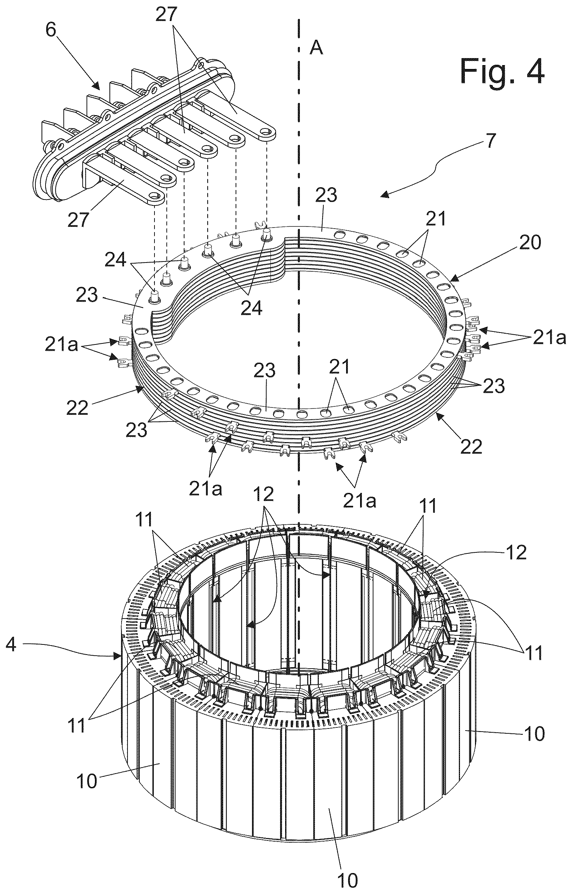

With reference to Figures 3 and 4, in particular the stator 4 preferably comprises: an annular magnetic core 10 advantageously substantially tubular cylindrical in shape, which extends coaxial to the longitudinal axis A and is at least partially made of ferromagnetic material; and a series of coils or electrical windings 11, which are suitably distributed over the inner surface of the annular magnetic core 10 and, when travelled by electrical current, are capable of generating a radial magnetic field.

More in detail, the coils or electrical windings 11 are preferably spaced in a substantially regular manner around the motor longitudinal axis A.

In addition, the annular magnetic core 10 is preferably provided, on the inner surface, with a plurality of longitudinal grooves 12, which are appropriately spaced around the longitudinal axis A, and the linear electrical conductors that contribute to forming the electrical windings 11 are preferably accommodated inside said longitudinal grooves 12.

In the example shown, in particular, the annular magnetic core 10 is preferably basically made up of laminations made of ferromagnetic material tightly packed against one another. The longitudinal grooves 12, furthermore, are preferably spaced in a substantially regular manner around the motor longitudinal axis A.

The structure of the stator 4 is of the conventional type and therefore will not be further described.

The rotor (not visible in the figures), on the other hand, preferably comprises: a central magnetic core substantially cylindrical in shape, which is at least partially made of ferromagnetic material, and is rigidly fixed to the drive shaft 2 coaxial to the motor longitudinal axis A; and a series of permanent magnets, which are suitably distributed on the periphery of said central magnetic core, so as to create a second radial magnetic field that interacts, in a known way, with the radial magnetic field generated by the electrical windings 11 of the stator 4.

More in detail, the permanent magnets are spaced in a substantially regular manner around the motor longitudinal axis A.

Similarly to the magnetic core 10 of stator 4, the magnetic core of the rotor is preferably basically made up of laminations made of ferromagnetic material tightly packed against one another.

Also the rotor structure is of conventional type and therefore will not be further described.

With reference to Figures 2 and 3, the rigid external casing 5, on the other hand, preferably comprises: a cup-shaped body 13, which extends coaxial to the longitudinal axis A, and is advantageously structured and dimensioned so as to contain, inside itself, the whole stator 4; and a cover 14 advantageously with a bell-shaped structure, which is arranged to close the mouth of the cup-shaped body 13, and is provided with a central through hole which, in turn, is engaged in a pass-through and axially rotatable by an end of the drive shaft 2.

Preferably, the external terminal block 6 is furthermore located on the cover 14 so as to be easily accessible from the outside of the motor.

With reference to figures 3 to 7, the inner electric circuit 7 is a closed loop electric circuit and comprises an annular body 20, which is located close to one of the two axial ends of the stator 4, advantageously so as to be substantially coaxial to said stator 4, and is structured so as to electrically connect the various electrical windings 11 of the stator 4 to one another and/or to the terminal block 6 (star or delta connection).

In further detail, the annular body 20 is structured so as to simultaneously connect all the electrical windings 11 of the stator 4 to the terminal block 6.

Preferably, the annular body 20 is furthermore rigidly fixed to the stator 4 and/or is entirely contained inside the rigid casing 5, or rather inside the cover 14.

More in detail, the annular body 20 is preferably substantially circular in shape, and preferably lies on a plane substantially perpendicular to the motor longitudinal axis A.

In addition, the annular body 20 has a nominal diameter preferably substantially equal to the nominal diameter of the magnetic core 10 of stator 4 and/or is preferably rigidly fixed to said magnetic core 10.

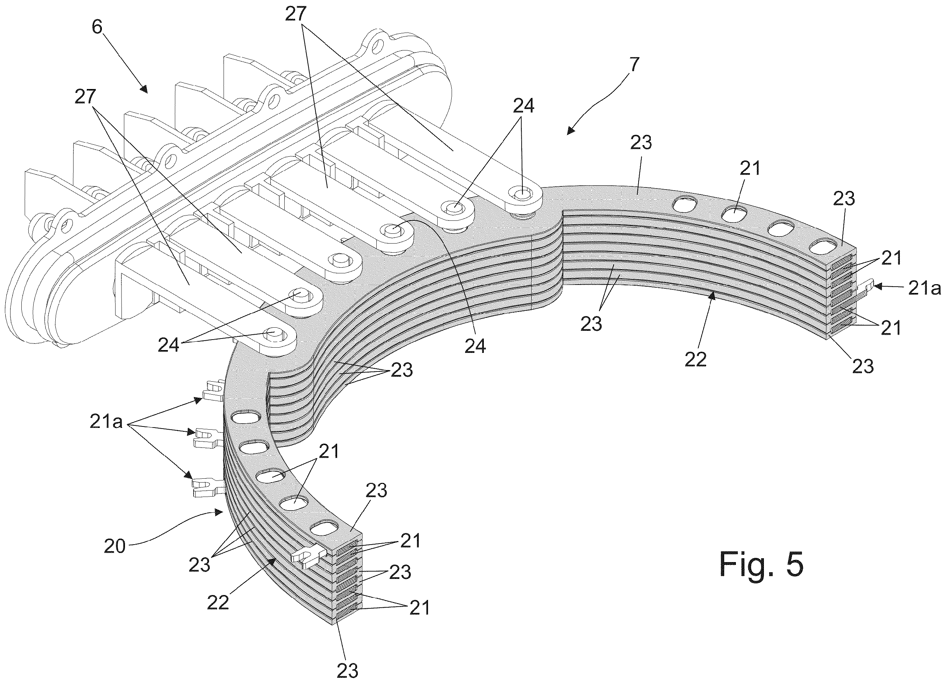

With reference to Figures 5, 6 and 7, in particular, the annular body 20 comprises: a series of annular flat-wires 21, with closed loop structure, which are made of electrically conductive material and are arranged one substantially coaxial and spaced above the other so as to form a tubular stack; and an external jacket 22 substantially tubular in shape, which is made of electrically insulating material and incorporates inside its annular wall the stack of annular flat-wires 21, isolating the individual annular flat-wires 21 from one another.

In other words, the annular flat-wires 21 are locally substantially coaxial to the tubular jacket 22, and are contained inside the thickness of the annular wall of said tubular jacket 22.

In addition, each annular flat-wire 21 is provided with a plurality of small protruding tabs or appendages 21a, which extend cantilevered from the outer perimeter edge of the annular flat-wire 21, and are dimensioned so as to protrude cantilevered on the outside of the annular wall of the tubular jacket 22. Outside of the tubular jacket 22, furthermore, the protruding tabs or appendages 21a are in electric continuity with the electrical windings 11 of the stator 4.

More in detail, each protruding tab or appendage 21a is connected, advantageously by welding, to one of the two ends of the wire or other linear electrical conductor, which contributes to forming an electrical winding 11 of stator 4.

With reference to Figures 3 to 7, in the example shown, in particular, the annular flat-wires 21 are closed in a loop advantageously seamlessly. In addition, the annular flat-wires 21 are preferably substantially circular in shape, and preferably lie on planes substantially perpendicular to the motor longitudinal axis A.

Preferably the annular flat-wires 21 furthermore have all substantially the same external diameter, and are aligned and superimposed to one another so as to form a stack substantially tubular cylindrical in shape.

In addition, the protruding tabs or appendages 21a of each annular flat-wire 21 preferably extend cantilevered from the outer perimeter edge of the annular flat-wire 21 in a substantially radial direction.

The tubular jacket 22, in turn, is preferably substantially tubular cylindrical in shape.

In addition, the tubular jacket 22 is preferably provided with cooling openings, which allow the oil or other cooling fluid to lap some or all of the annular flat-wires 21 incorporated inside the jacket 22.

With reference to Figures 5, 6 and 7, in particular, the insulating tubular jacket 22 is preferably basically made up of a series of spacer washers 23, which are made of electrically insulating material, advantageously have a shape substantially complementary to the annular flat-wires 21, and are interposed between the various annular flat-wires 21 so as to form a tubular stack which encloses and incorporates, inside itself, said annular flat-wires 21.

More in detail, similarly to the annular flat-wires 21, also the spacer washers 23 are preferably substantially circular in shape and lie on planes substantially perpendicular to the motor longitudinal axis A.

Preferably also the spacer washers 23 furthermore all have the same external diameter, and are aligned and superimposed to one another so as to form a stack substantially tubular cylindrical in shape.

In addition, the spacer washers 23 that form the two heads/axial ends of the tubular jacket 22 are preferably provided with through holes that allow the oil or other cooling fluid to lap at least the annular flat-wires 21 immediately underneath.

With reference to Figures 3 to 7, in addition, the annular body 20 further comprises a series of longitudinal connecting rods 24 advantageously substantially rectilinear, which are made of electrically conductive material, protrude cantilevered from one of the two heads/axial ends of the tubular jacket 22, and at same time extend inside the annular wall of said tubular jacket 22 up to reach and electrically connect to respective annular flat-wires 21.

In other words, each longitudinal rod 24 extends inside the tubular jacket 22 engaging in pass-through manner one or more spacer washers 23 that contribute to forming said tubular jacket 22.

Preferably, the longitudinal rods 24 are furthermore substantially rectilinear and extend inside the annular wall of the tubular jacket 22, while remaining locally substantially parallel to the longitudinal/central axis B of the same tubular jacket 22, i.e. while remaining locally substantially perpendicular to the laying planes of the annular flat-wires 21.

In other words, the longitudinal rods 24 extend through the spacer washer(s) 23 while remaining locally substantially perpendicular to the laying planes of the annular flat-wires 21 and of the spacer washers 23.

In addition, the longitudinal rods 24 are arranged spaced beside one another inside a sector of the annular wall of the tubular jacket 22, which preferably has a width less than or equal to 90° and/or a thickness greater than the rest of the annular wall of the tubular jacket 22.

Preferably at least one or, more conveniently, each longitudinal rod 24 is furthermore in electrical continuity with one single and unique annular flat-wire 21 of the annular body 20.

With particular reference to Figures 5, 6 and 7, in particular, at least one or, more conveniently, each longitudinal rod 24 of the annular body 20 is preferably substantially cylindrical in shape, and is preferably butt-welded on the related annular flat-wire 21.

In other words, the proximal end 24a of the longitudinal rod 24 is preferably firmly fixed on the related annular flat-wire 21 by welding.

The distal end 24b of the longitudinal rod 24, on the other hand, protrudes cantilevered from the annular wall of the tubular jacket 22.

In further detail, all longitudinal rods 24 of the annular body 20 preferably protrude cantilevered from the annular wall of the tubular jacket 22 at the head/axial end located on the side opposite the stator 4.

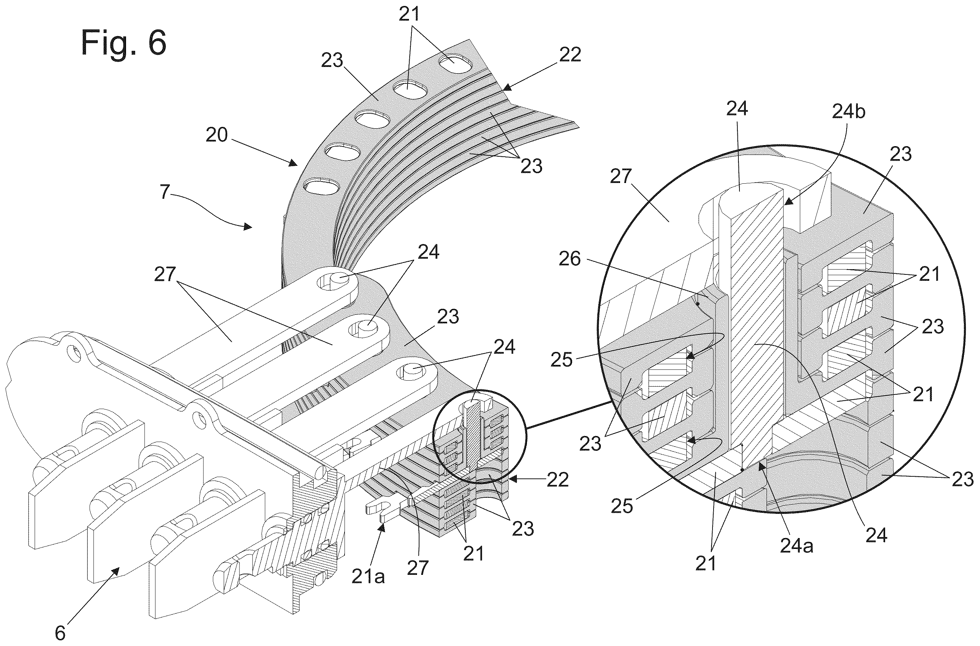

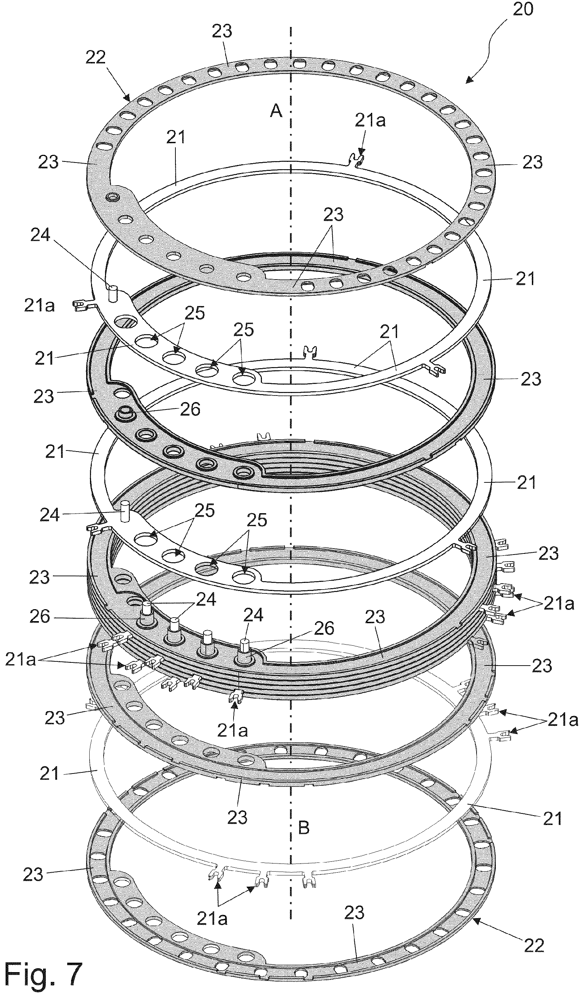

With reference to Figures 6 and 7, preferably some longitudinal rods 24 of the annular body 20 moreover reach the corresponding annular flat-wires 21 by crossing pass-through openings 25 purposely provided in the annular flat-wires 21 above the destination/arrival one, clearly without direct contact with the crossed ones.

In other words, the longitudinal rods 24 of the annular body 20 are in electrical continuity only with the destination/arrival annular flat-wire 21, i.e. with the annular flat-wire 21 to which they are butt-welded.

Preferably, the insulating tubular jacket 22 is further structured so as to be interposed, inside each through opening 25, between the longitudinal rod 24 and the body of the annular flat-wire 21, thus ensuring the necessary electrical insulation between the two components.

In the example shown, in particular, the tubular jacket 22 moreover comprises, for each longitudinal rod 24, a collar 26 made of electrically insulating material, which surrounds the longitudinal rod 24 up to the annular flat-wire 21 with which the rod is integral. Preferably the collar 26 is furthermore made in one single piece with one of the spacer washers 23 crossed by said longitudinal rod 24.

With reference to figures 4, 5 and 6, in turn the external terminal block 6 is preferably provided with a number of electrical terminals equal to the number of longitudinal rods 24 of the annular body 20.

The inner electric circuit 7, on the other hand, preferably comprises a plurality of transversal connection bars 27 advantageously with square section, which are made of electrically conductive material and extend bridge-like between the longitudinal rods 24 of the annular body 20 and the external terminal block 6, so as to provide the electrical continuity between the longitudinal rods 24 and the various electrical terminals of the external terminal block 6.

More in detail, the inner electric circuit 7 is preferably provided with a number of connection bars 27 equal to the number of longitudinal rods 24 of the annular body 20.

Each connection bar 27, furthermore, is adapted to provide the electrical continuity between a respective longitudinal rod 24 of the annular body 20 and a corresponding (single and unique) electrical terminal of the terminal block 6.

With reference to Figures 3 to 6, in particular, the connection bars 27 extend up to the respective longitudinal rods 24 preferably while remaining on a same laying plane, which is advantageously substantially orthogonal to the motor longitudinal axis A and/or is substantially tangent to the distal ends 24a of the various longitudinal rods 24 of the annular body 20.

Preferably each connection bar 27 is furthermore butt-fixed to the distal end 24b of the corresponding longitudinal rod 24.

In addition, the connection bars 27 are preferably also substantially rectilinear and advantageously extend bridge-like between the longitudinal rods 24 and the respective electrical terminals of the terminal block 6 while remaining parallel and adjacent to each other.

In the example shown, in particular, the connection bars 27 are substantially coplanar to one another, and extend rectilinearly over the common laying plane parallel to one another up to reach the respective longitudinal rods 24.

Preferably at least one and more conveniently each connection bar 27 is finally butt-fixed to the distal end 24b of the related longitudinal rod 24 advantageously by welding.

General operation of electric motor 1 and of motor vehicle 100 is easily inferable from the above description and do not require further explanation.

The advantages connected to the particular structure of the annular body 20 are noteworthy.

Firstly, the use of the longitudinal rods 24 provides a more solid, lightweight and compact annular body 20 than those currently in use in high-performance electric motors, with consequent reduction in the overall axial length of the electric motor 1.

In addition, the particular closed loop shape of the annular flat-wires 21 reduces the resistive losses with equal electric current directed towards the electrical windings 11 of the stator 4.

Furthermore, the presence of the longitudinal rods 24 simplifies and speeds up the assembly of the annular body 20 and of the entire inner electric circuit 7.

The welding of the longitudinal rods 24 to the related annular flat-wires 21 and/or to the related transversal connection bars 27, in fact, eliminates the use of the anchoring bolts and gives greater rigidity and robustness to the resulting structure.

In addition, the welding of the longitudinal rods 24 to the annular flat-wires 21 and/or to the transversal connection bars 27 ensures improved electrical continuity between the two components, thus allowing the passage of a greater electrical current and/or less heating of the joining area between the two components.

Moreover, the particular structure of the annular body 20 offers greater dimensional stability of the component (avoiding the accordion effect), and ensures greater mechanical stability on the assembled product.

It is finally clear that modifications and variations may be made to the electric motor 1 and to the motor vehicle 100 without departing from the scope of the present invention.

For example, the tubular jacket 22 may be made in one single piece by moulding directly on the stack of annular flat-wires 21.

## Claims

1. Electric motor (1) for automotive traction comprising: a stator (4) provided with a plurality of electrical windings (11), which are distributed around a motor longitudinal axis (A) and are capable of generating a rotating magnetic field when travelled by electric current; a rotor which is accommodated in the stator (4) with the capability of rotating about said motor longitudinal axis (A); and an inner electric circuit (7), which connects said electrical windings (11) to an external terminal block (6) so as to allow the passage of electric current to and from said electrical windings (11), and includes an annular body (20) structured to electrically connect said electrical windings (11) to each other and/or to said external terminal block (6);
said annular body (20) comprising: a series of annular flat-wires (21), which are made of electrically conductive material and are arranged one above the other so as to form a tubular stack; and a tubular jacket (22), which is made of electrically insulating material and encloses within its annular wall the stack of annular flat-wires (21), isolating the individual annular flat-wires (21) from each other;
the electric motor (1) being **characterised in that** said annular body (20) additionally comprises a series of longitudinal rods (24), which are made of electrically conductive material, protrude from one of the two axial ends of the tubular jacket (22), and at the same time extend inside the annular wall of said tubular jacket (22) up to reach and electrically connect to respective annular flat-wires (21).

2. Electric motor according to claim 1, wherein said longitudinal rods (24) are rectilinear and substantially parallel to the tubular-jacket longitudinal axis (B).

3. Electric motor according to claim 1 or 2, wherein said longitudinal rods (24) are arranged one spaced alongside the other inside a sector of the annular wall of the tubular jacket (22), which sector has a width less than or equal to 90° and/or a thickness greater than the rest of the annular wall of said tubular jacket (22).

4. Electric motor according to claim 1, 2 or 3, wherein at least one of said longitudinal rods (24) is in electrical continuity with a single annular flat-wire (21) of the annular body (20).

5. Electric motor according to any one of the preceding claims, wherein at least one longitudinal rod (24) is butt-fixed on the corresponding annular flat-wire (21) by welding.

6. Electric motor according to any one of the preceding claims, wherein some longitudinal rods (24) of the annular body (20) reach the corresponding annular flat-wires (21) by crossing pass-through openings (25) realized in the annular flat-wires (21) above the destination one.

7. Electric motor according to any one of the preceding claims, wherein the tubular casing (22) includes a series of spacer washers (23), which are made of electrically insulating material and are interposed between the various annular flat-wires (21) so as to form a tubular stack, which encloses and incorporates within itself said annular flat-wires (21); one or more spacer washers (23) being engaged in pass-through manner by said longitudinal rods (24).

8. Electric motor according to any one of the preceding claims, wherein each annular flat-wire (21) is provided with a plurality of protruding appendages (21a), which extend cantilevered from the outer perimeter edge of the annular flat-wire (21), and are dimensioned to protrude cantilevered outside the annular wall of the tubular jacket (22); said protruding appendages (21a) being in electrical continuity with the electrical windings (11) of the stator (4).

9. Electric motor according to any one of the preceding claims, wherein the annular body (20) is arranged close to one of the two axial ends of the stator (4), advantageously substantially coaxial to the same stator (4).

10. Electric motor according to any one of the preceding claims, wherein the annular body (20) is rigidly fixed to the stator (4).

11. Electric motor according to claim 9 or 10, wherein the longitudinal rods (24) protrude cantilevered from the annular wall of the tubular jacket (22) on the opposite side to the stator (4).

12. Electric motor according to any one of the preceding claims, wherein the inner electric circuit (7) moreover comprises a plurality of connection bars (27), which are made of electrically conductive material and extend bridging the longitudinal rods (24) of the annular body (20) and the electrical terminals of said terminal block (6); at least one of said connection bars (27) being fixed to the respective longitudinal rod (24) of the annular body (20) by welding.

13. A road motor vehicle (100) provided with ground-resting wheels (107, 108) and comprising: a powertrain (102), which is adapted to drive into rotation at least one of said ground-resting wheels (107, 108); an electric-energy accumulator (103), which is capable of accumulating within itself a given quantity of electric energy to be supplied to said powertrain ( 102); and an electric power supply unit (104), which is adapted to regulate the flow of electric energy from the electric-energy accumulator (103) towards the powertrain (102), according to the commands given by the vehicle driver;
the motor vehicle (100) being **characterised in that** said powertrain (102) comprises an electric motor for automotive traction (1) realized according to any one of the preceding claims.
